(19) Europäisches Patentamt / European Patent Office / Office européen des brevets

(11) EP 4 756 696 A1

(12) **EUROPEAN PATENT APPLICATION**

(43) Date of publication:
10.06.2026 Bulletin 2026/24

(21) Application number: 25202991.3

(22) Date of filing: 18.09.2025

(51) International Patent Classification (IPC):
*G06Q 30/0202* (2023.01)

(52) Cooperative Patent Classification (CPC):
G06Q 30/0202

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 05.12.2024 IN 202421096074

(71) Applicant: **Tata Consultancy Services Limited Maharashtra (IN)**

(72) Inventors:
• **DESHMUKH, Shashank Madhukar**
**411057 Pune, Maharashtra (IN)**
• **GANESAN, Viswanath Kumar**
**600113 Chennai, Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR IDENTIFYING LIFE CYCLE STAGE OF A PRODUCT**

(57) Every product in the market is associated with a lifecycle stage. It is crucial to identify the current life cycle stage of a product from a business perspective. Conventional approaches fails to identifying the lifecycle stages of the product. The primary reason being the unavailability of the data. The present disclosure looks at continuous capture of supply chain data of a product from procurement to manufacturing to distributor to end customer using smart sensors and various other electronic modes. The data as available for the product is stored in the data warehouse and subsequently taken through data classification and preprocessing steps to apply necessary data science models that involve use of segmentation/clustering algorithms, classification models, demand forecasting and prediction algorithms, as well as other required Deep Learning models that are relevant to the product under preview to design and develop association rules to provide the predictions on life cycle stages.

FIG. 1B

**Description**

CROSS-REFERENCE TO RELATED APPLICATIONS AND PRIORITY

The present application claims priority from Indian application no. 202421096074, filed on December 5, 2024.

TECHNICAL FIELD

The disclosure herein generally relates to the field of e-commerce and, more particularly, to a method and system for identifying the life cycle stage of a product.

BACKGROUND

The life cycle stages of a product (or consumer good) is the progression of a product through 5 distinct stages including development stage, introduction stage, growth stage, maturity stage, and decline stage. It is crucial to identify the current life cycle stage of a product from a business perspective. For example, the consumer good may include beauty, grooming, health care, fabric/home care, and baby, feminine, and family care products as well as not limiting to utilitarian goods such as detergents, shoes and pens and pencils, to cutting-edge technology such as iPads and smartphones.
There has been a good amount of academic research and use cases available in the market to define product life cycle stages using various combination of models and algorithms. Most of the conventional models are derived from practices specific to business domain and application such as machineries in manufacturing, consumer goods in electronic retail, utilitarian goods for consumers, and the like. There has been limited or no comprehensive solution that is available in the market that typically targets all types of consumer goods per-se. Further, the conventional approaches fails to identify the right life cycle stage of the product looking into historical business data sets and current market trends with utility of the product.

SUMMARY

Embodiments of the present disclosure present technological improvements as solutions to one or more of the above-mentioned technical problems recognized by the inventors in conventional systems. For example, in one embodiment, a method for identifying life cycle stage of a product is provided. The method includes receiving, by one or more hardware processors, a plurality of supply chain attributes pertaining to a product in real time from a plurality of sources, wherein the plurality of supply chain attributes are in a plurality of granularity levels. Further, the method includes classifying, by the one or more hardware processors, the plurality of supply chain attributes into one of a) a structured attributes b) a semi-structured attributes and c) unstructured attributes based on product attributes and definition using an ensemble of classifiers. Furthermore, the method includes obtaining, by the one or more hardware processors, a plurality of preprocessed supply chain attributes by performing on the plurality of supply chain attributes a) data interpolation b) outliers elimination and c) trend analysis based on the classified supply chain data and an associated historical data. Furthermore, the method includes obtaining, by the one or more hardware processors, a plurality of attribute groups from among the plurality of preprocessed supply chain attributes based on supply chain echelons and an associated scope, wherein a plurality of common attributes exists between adjacent echelons. Furthermore, the method includes iteratively generating, by the one or more hardware processors, a gain ratio based decision tree associated with each of the plurality of attribute groups, the gain based decision tree comprising a plurality nodes representing the plurality of preprocessed supply chain attributes, wherein a plurality of leaf nodes and a hierarchy level associated with each of the plurality of nodes is decided based on a plurality of parameters comprising market intelligence, the product attributes, internal equivalent products, competitor products, policy and taxation parameters. Furthermore, the method includes obtaining, by the one or more hardware processors, a classification detail associated with the product based on the generated gain ratio-based decision tree. Furthermore, the method includes performing, by the one or more hardware processors, a future demand forecast of the product based on a historical transaction data, a plurality of internal equivalent products and a plurality of competitor products using a demand forecasting technique. Finally, the method includes identifying, by the one or more hardware processors, a product life cycle phase of the product based on the classification details associated with the product, a historical demand data pertaining to same and similar products and the future demand forecast using adaptive Q learning, wherein a life cycle associated with the product is mapped against a plurality of predefined supply chain based prepositions to identify the life cycle phase associated with the product.
In another aspect, a system for identifying life cycle stage of a product is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a plurality of supply chain attributes pertaining to a product in real time from a plurality of sources, wherein the plurality of supply chain attributes are in a plurality of granularity levels. Further, the one or more hardware processors are configured by the programmed instructions to classify the plurality of supply chain attributes into one of a) a structured attributes b) a semi-structured attributes and c) unstructured attributes based on product attributes and definition using an ensemble of classifiers. Furthermore, the one or more hardware processors are configured by the programmed instructions to obtain, a plurality of preprocessed supply chain attributes by performing on the plurality of supply chain attributes a) data interpolation b) outliers elimination and c) trend analysis based on the classified supply chain data and an associated historical data. Furthermore, the one or more hardware processors are configured by the programmed instructions to obtain a plurality of attribute groups from among the plurality of preprocessed supply chain attributes based on supply chain echelons and an associated scope, wherein a plurality of common attributes exists between adjacent echelons. Furthermore, the one or more hardware processors are configured by the programmed instructions to iteratively generate a gain ratio based decision tree associated with each of the plurality of attribute groups, the gain based decision tree comprising a plurality nodes representing the plurality of preprocessed supply chain attributes, wherein a plurality of leaf nodes and a hierarchy level associated with each of the plurality of nodes is decided based on a plurality of parameters comprising market intelligence, the product attributes, internal equivalent products, competitor products, policy and taxation parameters. Furthermore, the one or more hardware processors are configured by the programmed instructions to obtain a classification detail associated with the product based on the generated gain ratio-based decision tree. Furthermore, the one or more hardware processors are configured by the programmed instructions to perform, a future demand forecast of the product based on a historical transaction data, a plurality of internal equivalent products and a plurality of competitor products using a demand forecasting technique. Finally, the one or more hardware processors are configured by the programmed instructions to identify, a product life cycle phase of the product based on the classification details associated with the product, a historical demand data pertaining to same and similar products and the future demand forecast using adaptive Q learning, wherein a life cycle associated with the product is mapped against a plurality of predefined supply chain based prepositions to identify the life cycle phase associated with the product.

In yet another aspect, there are provided one or more non-transitory machine-readable information storage mediums comprising one or more instructions which when executed by one or more hardware processors cause receiving a plurality of supply chain attributes pertaining to a product in real time from a plurality of sources, wherein the plurality of supply chain attributes are in a plurality of granularity levels. Further, the one or more non-transitory machine-readable information storage mediums comprising one or more instructions which when executed by one or more hardware processors cause classifying the plurality of supply chain attributes into one of a) a structured attributes b) a semi-structured attributes and c) unstructured attributes based on product attributes and definition using an ensemble of classifiers. Furthermore, the one or more non-transitory machine-readable information storage mediums comprising one or more instructions which when executed by one or more hardware processors cause obtaining a plurality of preprocessed supply chain attributes by performing on the plurality of supply chain attributes a) data interpolation b) outliers elimination and c) trend analysis based on the classified supply chain data and an associated historical data. Furthermore, the one or more non-transitory machine-readable information storage mediums comprising one or more instructions which when executed by one or more hardware processors cause obtaining a plurality of attribute groups from among the plurality of preprocessed supply chain attributes based on supply chain echelons and an associated scope, wherein a plurality of common attributes exists between adjacent echelons. Furthermore, the one or more non-transitory machine-readable information storage mediums comprising one or more instructions which when executed by one or more hardware processors cause iteratively generating a gain ratio based decision tree associated with each of the plurality of attribute groups, the gain based decision tree comprising a plurality nodes representing the plurality of preprocessed supply chain attributes, wherein a plurality of leaf nodes and a hierarchy level associated with each of the plurality of nodes is decided based on a plurality of parameters comprising market intelligence, the product attributes, internal equivalent products, competitor products, policy and taxation parameters. Furthermore, the one or more non-transitory machine-readable information storage mediums comprising one or more instructions which when executed by one or more hardware processors cause obtaining a classification detail associated with the product based on the generated gain ratio-based decision tree. Furthermore, the one or more non-transitory machine-readable information storage mediums comprising one or more instructions which when executed by one or more hardware processors cause performing, a future demand forecast of the product based on a historical transaction data, a plurality of internal equivalent products and a plurality of competitor products using a demand forecasting technique. Finally, the one or more non-transitory machine-readable information storage mediums comprising one or more instructions which when executed by one or more hardware processors cause identifying, a product life cycle phase of the product based on the classification details associated with the product, a historical demand data pertaining to same and similar products and the future demand forecast using adaptive Q learning, wherein a life cycle associated with the product is mapped against a plurality of predefined supply chain based prepositions to identify the life cycle phase associated with the product.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for identifying life cycle stage of a product, in accordance with some embodiments of the present disclosure.

FIG. 1B illustrates overall functional architecture of the system for the identifying life cycle stage of a product, in accordance with some embodiments of the present disclosure.

FIG. 2A and FIG. 2B illustrates a flow diagram for a processor implemented method for identifying life cycle stage of a product, in accordance with some embodiments of the present disclosure.

FIG. 3 illustrates functional architecture for classifying supply chain attributes of the system for the identifying life cycle stage of a product, in accordance with some embodiments of the present disclosure.

FIGS. 4A and 4B illustrate example improvised decision trees for the processor implemented method for identifying life cycle stage of a product, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Every product in the market is associated with five distinct stages of life cycle including development stage, introduction stage, growth stage, maturity stage, and decline stage. Many external factors such as geography, country or state of use, urban/rural lifestyle of the people, social and income levels, etc., do affect the use and consumption of the product. The product features such as purpose, life span, utility, etc., and other competing products in the market do affect the potential value of the product in the market. In addition to the above details, many other factors do affect the life cycle of the product that can be listed below:

- Supplier details and their relevance in the manufacturing of the product
- Manufacturing technology used and the related data
- Supply chain and logistics to move the product from point of produce to point of consumption
- Warranty and product support availability as the product is adapted or matures in its usage in the market.

Electronic gadgets such as mobiles, tablets, etc., are classic examples. The introduction of the mobile device in a market involves identification of the geography or country where it must be launched, and after launching the production it is necessary to predict the demand of the product during the first few months of the product. Similarly, as the product matures with an increase in sales over a period, it is essential to determine the growth phase of the product with consumption patterns and behaviors. It is becoming necessary to look at estimating the same across multiple stages till the product reaches the end-of-life cycle stage or phased out from the market.

Very few attempts have been made in conventional approaches to evolve a model for identifying the lifecycle stages of the product. The primary reason being the unavailability of the data. For example, capturing the product supply chain and consumption data and evolving the platform to continual capture of data of the products in market to relate and associate the life cycle stage of the product is a challenging task.

To address the technical complexity of the conventional approaches, embodiments herein provide a method and system for identifying the life cycle stage of a product. The present disclosure looks at continuous capture of consumer goods data in supply chain from the point of procurement to manufacturing to distributor/wholesaler to end customer using smart sensors and various other electronic modes. The data as available for the product is stored in the data warehouse and subsequently taken through data classification and processing steps to apply necessary data science models that involve use of segmentation/clustering algorithms, classification models, demand forecasting and prediction algorithms, as well as various other required Machine Learning (ML) or Deep Learning (DL) models that are relevant to the product under preview to design and develop association rules to provide the predictions on life cycle stages.

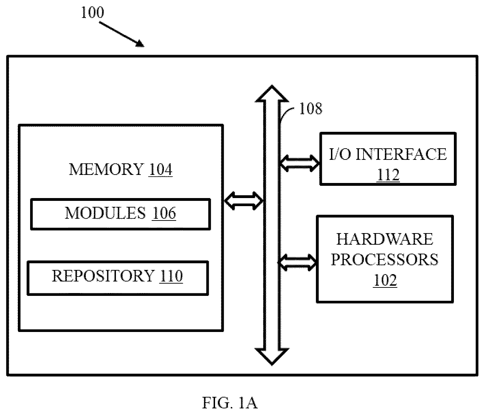

Referring now to the drawings, more particularly to FIG. 1A through FIG. 4B, where similar reference characters denote corresponding features consistently throughout the figures, there are shown preferred embodiments, and these embodiments are described in the context of the following exemplary system and/or method.

FIG. 1A is a functional block diagram of system 100 for identifying life cycle stage of a product, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and Dynamic Random Access Memory (DRAM), and/or nonvolatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Identifying life cycle stage of a product. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for Identifying life cycle stage of a product.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS).

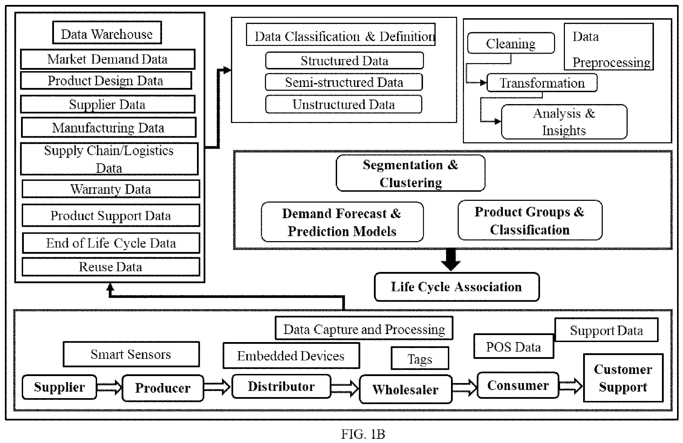

The overall architecture of the system of FIG. 1A is explained in conjunction with FIG. 1B. Now referring to FIG. 1B, the life cycle stage prediction model uses secondary and primary data repositories to store data and information about various products in the market, their demand on temporal periods across years, and various other data points as mentioned above with closer mapping to the predefined or predetermined life cycle stages of the products. A new product that is being foreseen or introduced into the market can leverage the data repositories to define the length of the introduction stage of the product, and as the product evolves the growth phase may be derived with and so on. The process essentially involves the use of the following mentioned steps: Initially, product data is captured across the supply chain from the point of supply to manufacturing to distribution to end consumption. Further, the supply chain data is preprocessed and stored in data warehouses. Classification of data into structured/semi-structured/unstructured data is performed by cleansing, performing necessary transformation and obtaining necessary insights with information. Further, the product is classified with respect to market segments, and population clusters where it is foreseen to use or used. Further, competitive products in the market is identified based on utility and purpose of the product. Further, demand forecast estimation is performed to understand the anticipated consumption patterns. Defining and mapping the consumption patterns with existing multiple other product data and information in repositories is performed further and arrived at life cycle association.

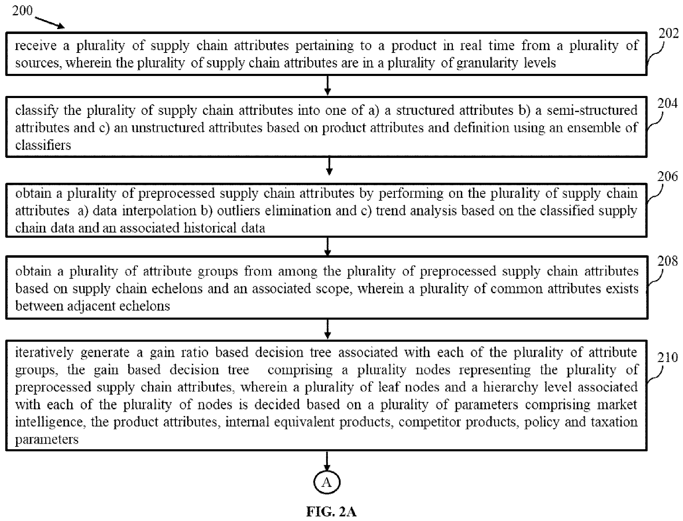

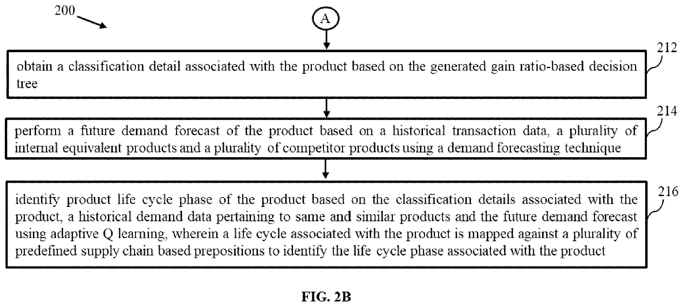

The working of the components of system 100 are explained with reference to the method steps depicted in FIG. 2A and FIG. 2B.

FIG. 2A and FIG. 2B is an exemplary flow diagram illustrating a method 200 for identifying life cycle stage of a product implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2A and FIG. 2B. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2A and FIG. 2B, at step 202 of method 200, the one or more hardware processors 102 are configured by the programmed instructions to receive a plurality of supply chain attributes pertaining to a product in real time from a plurality of sources. For example, the plurality of supply chain attributes comprises a market demand data, a product design data, a supplier data, a manufacturing data, a logistics data, a warranty data, a product support data, an end of lifecycle data and a reuse data., wherein the plurality of supply chain attributes are in a plurality of granularity levels. For example, the plurality of sources includes a plurality of smart sensors, plurality of embedded devices, tags, Point of Sale (POS) devices and support data associated with the supply chain of the product.

At step 204 of the method 200, the one or more hardware processors 102 is configured by the programmed instructions to classify the plurality of supply chain attributes into one of a) a structured attributes b) a semi-structured attributes and c) an unstructured attribute based on product attributes and definition using an ensemble of classifiers.

For example, the ensemble of classifiers includes classical decision trees or random forests on larger volumes of dataset to identify patterns or best fit values by defining inference-based rules to fix the issues in the transactional data.

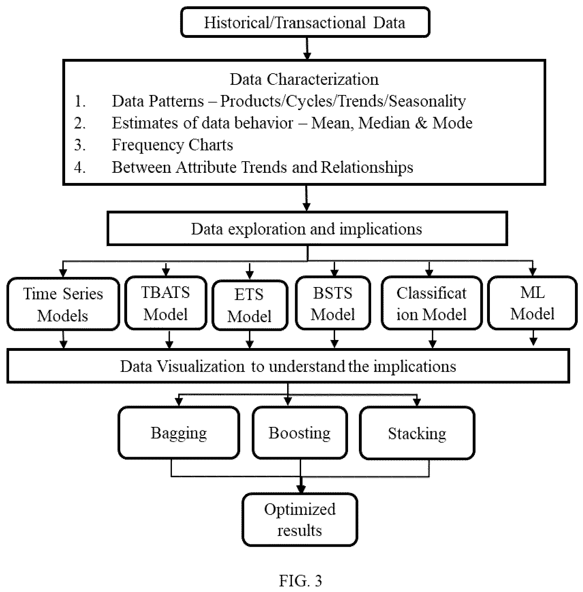

Prior to classifying the plurality of supply chain attributes, the plurality of supply chain attributes undergoes data cleaning and preprocessing steps as shown in FIG. 3. Now referring to FIG. 3, the data cleaning and preprocessing involves analysis of historical data and incumbent transactional data that are arriving at the system to identify missing values, exceptions with are anomalies, outliers that could be manual revisions, and unexpected behaviors or trends due to various business reasons.

For example, the introduction of new products into the market also brings in issues in capture of data and must be seen gradual increase in sales volumes while simultaneous gradual reduction in production (as well as sales) of the old product Stock Keeping Units (SKUs). The definitions of SKUs (both old and new) with necessary changes in historical data will be captured in life cycle management activities. The definition for changes that need to be performed on historical data will be captured as business rules that will accommodate the necessary corrections to be performed on the SKUs historical data to provide the required business forecasts for both old and new SKUs. For example, it could be 80:20 (old: new) in the first month, 60:40 in the second month and so on till the old product SKU gets completely eliminated from supplies.

Over time, there will be structural changes in the supply network as the businesses continually seek to optimize their total delivered costs. As these structural changes are made in the network, it is imperative that the demand is appropriately realigned to the proper servicing location. The realignments will happen across the SKUs which have the following needs:

- Eliminating existing product SKUs and subsequently or simultaneously introducing new product SKUs
- Eliminating existing product SKUs without any new product SKU introduction.

Another important aspect in preprocessing historical or transactional data is anomaly detection that involves an unsupervised data processing approach to detect anomalies from the data set. An anomaly can be broadly classified into different categories:

- *Outliers*: Short/small anomalous patterns that appear in a non-systematic way in data collection.
- *Change in events*: Systematic or sudden change from the previous normal behavior.
- *Drifts*: Slow, unidirectional long-term change in the data. Introducing new product SKUs which may not have any existing SKUs mapping

The following steps present the details of ensemble process to enable the present disclosure to fix issues related to data needs:

Data Characterization: Many of the above requires capture of necessary information and data as relevant to our modelling needs and involves analysis of data that will enable us to define the following:

1. Data Patterns - Products/Cycles/Trends/Seasonality
2. Estimates of data behavior - Mean, Median & Mode
3. Frequency Charts
4. Between Attribute Trends and Relationships

Data Exploration: The historical or transactional data used for analysis needs to be cleaned to evaluate the goodness of the fit for further use in the Life Cycle Management Model. The following approaches are proposed to identify the missing values, outliers, exceptions and other anomalies in the data:

- Set statistical limits based on data behavior based on nature of data
- Inputs from business processes on promotions, seasonality and climatic conditions if required to study high peaks and troughs in the historical profiles
- Defining historical transactional profiles to identify outliers, exceptions, and other anomalies

    a. This involves use of practices for correcting the historical data

        i. Transactional profile periodic (ex: yearly /seasonal): Use average of the same period of previous years data as the corrected historical data for the year under consideration

The new or historical transactional data from various elements in the supply chain along with identified issues are further pushed into multiple models to determine the right replacement values across the multiple data tables will be used for further classification and segmentation process to define the product life cycle.

Estimation Models: The following models are used in this process step: *ARIMA Model*: The model is best suited for determining short term estimates and requires a minimum of 3 operational cycles with only forward estimation scope with respect to time lines.

- *TBATS Model*: TBATS is acronym for Trigonometric seasonality, Box-Cox transformation, ARMA errors, Trend, and Seasonal components. The model easily incorporates seasonal cycles and uses trigonometric regressors to account for errors or missing values in the data. The model does not support covariates.

- *ETS Model*: The model uses exponential smoothing in presence of seasonality and non-stationarity in the given data sets. The model may be strenuous when used over very large datasets.

- *BSTS Model*: It is a dynamic model used in supply chains where data captures seasonality, trend, encrypted information, and other market data or information. It is reliable for high dimensional problems that do not involve use of samples from the historical datasets.

- *Classification Model*: The classification models use of classical decision trees or random forests on larger volumes of dataset to identify patterns or best fit values by defining inference-based rules to fix the issues in the transactional data.

- *Machine learning models*: The models used include one-class support vector machine (SVM), one-class SVM with stochastic gradient descent and robust covariance. Robust covariance uses statistical techniques to detect anomalies in the data set. For a Gaussian/normal distribution, the data points lying away from third deviation can be considered as anomalies. A regular support vector machine algorithm tries to find a hyperplane that best separates the two classes of data points.

Data Visualization: The results obtained from the multiple models are presented using one or more visualization tools to understand the implications of the revisions/corrections in the historical transactional data.

Minimizing variance and improving accuracy of estimates: Bagging, boosting and stacking models are used with the objective of minimizing variance with accurate estimates for the anomalies present in the transactional data. Bagging, boosting, and stacking belong to a class of machine learning algorithms known as ensemble learning algorithms. Ensemble learning involves combining the predictions of multiple models into one to increase prediction performance.

*Bagging*: It is an ensemble learning technique that combines the benefits of bootstrapping and aggregation to yield a stable model and improve the prediction performance of a machine-learning model. It primarily reduces the variance and minimizes overfitting.

*Boosting*: It involves sequential training of models with the objective of having each model correct the errors of its predecessor. This continues until the predefined number of trained models, or some other criteria are met. It is a better model when there is no requirement for tweaking of data definitions with the motive of minimizing the variance of single estimate.

*Stacking*: In stacking, the predictions of base models are fed as input to a meta-model (or meta-learner). The job of the meta-model is to take the predictions of the base models and make a final prediction.

Evaluation Criteria: The final optimized result addresses the selection of best estimates for the data characteristics from each one of the business processes and the approaches are evaluated for performance against actual datasets with training and test datasets. The efficiency of each model is evaluated based on Symmetric Mean Absolute Percentage Error. The following expression given as equation (1) is used for calculating the accuracy of estimates with n observations:

$$\text{Error} = \frac{1}{n} \sum_{i=1}^{n} \frac{|F_i - O_i|}{(F_i + O_i)/2} \quad \ldots\ldots\ldots\ldots\ldots(1)$$

$F_i$ and $O_i$ are estimated and observed values while n is the horizon with defined observations.

Referring back to FIG. 2A and FIG. 2B, at step 206 of the method 200, the one or more hardware processors 102 is configured by the programmed instructions to obtain a plurality of preprocessed supply chain attributes by performing a) data interpolation b) outliers elimination and c) trend analysis based on the classified supply chain data and an associated historical data.

Referring back to FIG. 2A and FIG. 2B, at step 208 of the method 200 the one or more hardware processors 102 is configured by the programmed instructions to obtain a plurality of attribute groups from among the plurality of preprocessed supply chain attributes based on supply chain echelons and an associated scope, wherein a plurality of common attributes exists between adjacent echelons.

At step 210 of the method 200, the one or more hardware processors 102 is configured by the programmed instructions to iteratively generate a gain ratio based decision tree associated with each of the plurality of attribute groups including a plurality nodes representing the plurality of preprocessed supply chain attributes. A plurality of leaf nodes and a hierarchy level associated with each of the plurality of nodes is decided based on a plurality of parameters including market intelligence, the product attributes, internal equivalent products, competitor products, policy and taxation parameters.

The gain ratio-based decision tree is an improvised decision tree. The sales data may be captured transactional level and integration of sales data with geography data or information (or with other data such as logistics, production, etc.,) may be unnecessary do perform a exhaustive evaluation to intelligently classify the products to utilize the same for classification. The leaf nodes (or the lowest level attributes) are predefined using the experience and intelligence available from the market and these leaf level definitions in classification are further utilized to integrate the classification with the subsequent tables that contain data/information about other functional elements in the supply chain.

The improvised decision tree algorithm is presented below and the details are explained subsequently of the algorithm.

**Input:**

*Attribute set: A = {$a_1$, $a_2$, $a_3$,...., $a_m$}*
*Training dataset: S = {($x_1$, $y_1$), ($x_2$, $y_1$),..., ($x_1$, $y_2$), ($x_2$, $y_2$),..... ($x_m$, $y_d$)}*
*Number of levels in tree = l*
*Attribute precedence/combination set: P = {$a_i \rightarrow a_j$, $a_i$ AND $a_j$, etc.,}.* The number of elements defined in the set may be custom defined for a functional element in the supply chain and the number of attributes to define the precedence or combination may be flexible based on market dynamics.
*Preferred leaf attributes λ = {$a_k$}| k ∈ {predefined leaf nodes}*
*Attribute selection method*: A procedure to define the partitioning criteria that best splits the data into multiple classes for an attribute that may be defined as sub-sets. We have used Gain Ratio to select the attribute that will define the sub-sets or classes underneath it.

**TreeGenerate(S, A)**

1. create node *N*. Set *node_level* = 1
2. if samples in S are of the same class, C, **then**

    a. **return** N as a leaf node labelled with class C.
    b. **end if**

3. **If** A = Φ, **or** the value of attribute in S are same, **then**

    **a. return** *N* as a leaf node labelled with the majority in class in S.
    b. **end if**

4. **if** *node_level* = *l*-1, find the best splitting attribute from λ

    a. **else** find the best splitting attribute $a_j$ **or** combination of attributes $\{a_j\}$ from P

5. **for** every value $a^*(i,j)$ of $a_j$

    *a.* label node N with the splitting criterion. Set node_level = node_level + 1
    **b.** let $S_v$ be the data set | $S_v = \{a^v(i,j)\}$
    *c.* **if** $S_v$ = Φ, **then**

        i. attach a leaf labeled with majority class in S to node N

    d. **else**

        **i.** attach the node generated by *TreeGenerate* $(S_v, A\backslash(a_j))$

    e. **end if**
    f. **end for**

**Output: Decision Tree**

In an embodiment, a set of propositions are introduced to define the states of the demand profiles that are typically common across multiple SKUs across product categories. The six propositions define six states (as is, increasing, decreasing, flat, marginally increasing or decreasing) in the product life cycle stages after introducing the product in the market. The following set of propositions are introduced to enable the proposed model to learn and train itself over the historical data in a supervised manner to enable us to set the algorithmic configuration parameters. These propositions are characterizations obtained from the characterization of the demand behavior captured across good number products in similar or equivalent categories. However, as such the scope is not limited to only to these states and depending on the demand profile, appropriate definitions of the demand behavior with respect to observed definitions of the life cycle stage may be adopted as required and defined in historical practice.

    **Proposition 1:** A product will have a marginally increasing trend or demand behavior with minimal increasing slope when introduced in the market.
    **Proposition 2:** Change in demand behavior from a flat or a minimal slope pattern to an increasing or decreasing trend requires shift in the product life cycle stage.
    **Proposition 3:** Change in demand behavior to flat or minimal slope pattern from an increasing or decreasing trend requires shift in the product life cycle stage.
    **Proposition 4:** Demand can be defined to be in maturity phase when an increasing trend at its maximum shifts gradually towards a flat or a minimal slope pattern.
    **Proposition 5:** Demand movement from a rapidly decreasing trend after maturity phase shifts towards a flat or marginally decreasing trend may be defined to be in product elimination phase where the product may be phased out.
    **Proposition 6:** Changes in the life cycle stages are not required when there is no major change or shift in the demand trends.

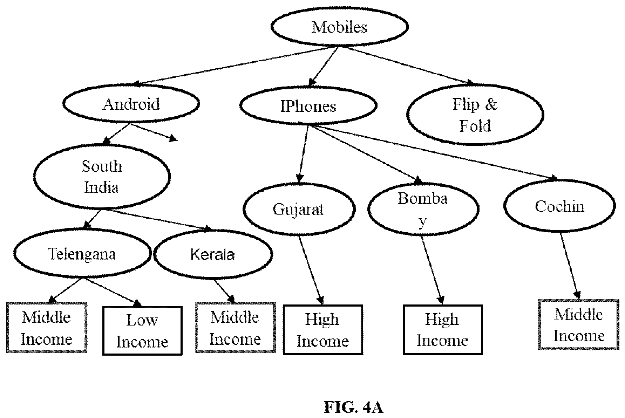

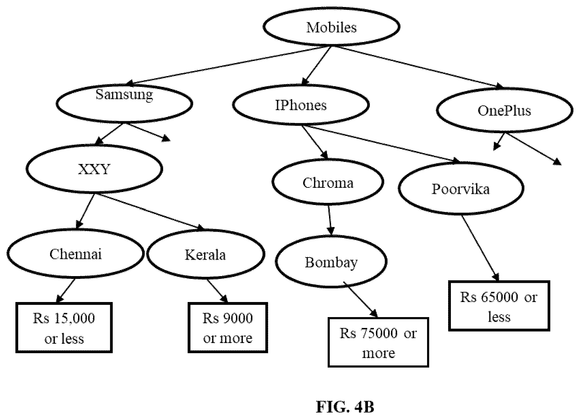

For example, consider the table I illustrating product profile and branding scope of mobile devices, the corresponding decision tree is shown in FIG. 4A. Considering the table II illustrating sales for the month August 2024, the corresponding decision tree is shown in FIG. 4B.

**Table I**

| Product Name | Variant | Geography | State | Location | Customer Profile |
|---|---|---|---|---|---|
| Android | Samsung | North India | Punjab | Chandigarh | Middle Income |
| | OnePlus | South India | Kerala | Cochin | High Income |
| | | | | | |
| iPhones | Apple 15 | Central India | Maharash tra | Bombay | High Income |
| | Apple 16 | Central India | Maharash tra | Bombay | Very High Income |
| | | | | | |
| | | | | | |
| Flip and Fold | | | | | |
| | | | | | |
| | | | | | |
| | | | | | |
| Feature Phones | | | | | |
| | | | | | |
| | | | | | |
| | | | | | |
| Refurbish ed Sets | | | | | |
| | | | | | |
| | | | | | |
| | | | | | |
| Gaming Sets | | | | | |
| | | | | | |
| | | | | | |
| | | | | | |
| | | | | | |

**Table II**

| Variant | Configuration | Price | Point of Sale | Location | Pieces Sold |
|---|---|---|---|---|---|
| Samsung | XXX | Rs 15,000 | Chroma | Chennai | 2000 |
| Samsung | XXY | Rs 9000 | Sangeetha | Chennai | 700 |
| Samsung | XXZ | Rs 7000 | Poorviga | Chennai | 1000 |
| Apple 15 | XX | Rs 65,000 | Maharashtra | Bombay | 600 |
| Apple 16 | XY | Rs 75,000 | Maharashtra | Bombay | 400 |
| OnePlus | AA | Rs 20,000 | | | |
| | | | | | |

At step 212 of the method 200, the one or more hardware processors 102 is configured by the programmed instructions to obtain a classification detail associated with the product based on the generated gain ratio-based decision tree.

One example sample classification rule as an outcome from the decision tree shown in FIG. 4A is given below:

• iPhones sales are significantly high when locations are metropolitan cities (Mumbai, Ahmedabad, Surat, etc.) in Northwest India. Target population is high income groups.

- Moderate Cost (greater than Rs 10,000 and less than Rs 25,000) Android mobile sales are significantly high when locations are both metropolitan and non-metropolitan in South India. Target population is middle income groups.

Another example sample classification rule as an outcome from the decision tree shown in FIG. 4B is below:

- iPhones sales are typically high across Factory outlets or multi-branded stores across Northwest India.

- Low cost mobiles (less than Rs 10,000) are high and fast moving across tech retail outlets in South India.

At step 214 of the method 200, the one or more hardware processors 102 is configured by the programmed instructions to perform a future demand forecast of the product based on a historical transaction data, a plurality of internal equivalent products and a plurality of competitor products using a demand forecasting technique.

At step 216 of the method 200, the one or more hardware processors 102 are configured by the programmed instructions to identify product life cycle phase of the product based on the classification details associated with the product, a historical demand data pertaining to same and similar products and the future demand forecast using adaptive Q learning. A life cycle associated with the product is mapped against a plurality of predefined supply chain-based prepositions to identify the life cycle phase associated with the product.

In the present disclosure, the combination of SKU, product category and historical demand profile over the past n periods are used to trigger the need for evaluation of policy change. The future demand profile arrived using a good forecasting model from an ERP system. An adaptation of Q-learning algorithm is used in the reinforcement learning process to select and use the mentioned propositions as actions (or policies) in the present disclosure.

**Adaptive Q-learning algorithm**

1. Initialize variables

        *policy* = {},
        $Q$ = {},
        *returns* = {},
        *actions* = set of all inventory policies under consideration,
        *state_action_reward* = [],
        *DISCOUNT_FACTOR* = 0.9,
        *EPSILON = 0.2*

    2. for time period *t* in *Demand*:

        a. $S_t$ = [$SKU_t$, *category, state*]
        b. If random(0, 1) < (1 - *EPSILON*)

            i. *action = policy*[$S$]

        c. else: *action* = random(*actions*)
        d. *reward* = -1 x $cost_t$
        e. if end of *Demand* has been reached:

            i. *state_action_reward.append*([$S_t$, null, *reward*])
            ii. break

        f. else:

            i. *state_action_reward.append*([$S_t$, *action, reward*])

        g. $G$ = 0, *state_action_return* = []
        h. for *state, action, reward* in reversed(*state_action_reward*)[1:]:

  i. *state_action_return.append([state, action, G])*
  ii. *G = reward + DISCOUNT_FACTOR x* G

 3. *seen_state_action* = ()
 4. Loop until *Q*[*s*] converges:

  a. for *state, action, G in state_action_return*:

   i. if [*state, action*] not in *seen_state_action*:

    1. *returns*[[*state, action*]].append(G)
    2. Q[s][a] = *mean*(*returns*[[*state, action*]])
    3. *seen_state_action.append*([*state, action*])

  b. for *s in policy.keys*():

   i. policy[s] = argmax(Q[s])

 5. *V=* {}
 6. for *s* in *policy.keys*():

  a. V[s] = max(Q[s])
  b. return V, policy

Now referring to the above algorithm, *action* is an array that contains different inventory policies that can be applied. S is the policy index. A is the action index. *reward* is the associated costs. $S_t$ is the state tuple which represents an array containing average shortage, frequency of shortages and average surplus during a time period. *policy* is a dictionary that maps an action to a state. *Returns is* the reward which is the total cost incurred. *state_action_reward* is an array that keeps track of the states, actions and their corresponding rewards. *state_action_return* is an array that contains the mean episodic reward for the specified time period. *seen_action_state* is an array containing the state-action pairs that have been visited already. It is used as a caching mechanism. *DISCOUNT_FACTOR* a factor that is set to 0.9 to ensure that the RL algorithm places higher weightage on long-term rewards. (Values closer to 1.0 are used to 'discount' the immediate reward). *EPSILON is* a factor used to balance exploration and exploitation by assigning a 20% chance to choose a random inventory policy. *Demand* is an array containing the forecasted demand values. G is the reward for an episode. Q is the Q-table which contains the reward for each action taken in each state. *V* contains the maximum return corresponding to the best action for a given state in the Q-table. Further, the following symbols are used,

 {}  to refer to dictionaries or key-value pairs.
 ()  to refer to sets where only unique elements are permitted.
 []  to refer to arrays.

An elegant method is being presented to determine the statistical significance of the difference between any combination of product profile curves. Most of the lifecycle profiles can be well described by explicit and practically meaningful typical curves, and thus any new profile that is being derived out of reinforcement learning model can be related to curve fitting to a set of meaningful fit parameters, with associated uncertainties that can be compared statistically. The need to compare two product life profiles involves determining the statistical significance of the difference between similar or equivalent curves is a commonly observed requirement and most of the times do not find a widely known and easily implemented solution. The product profiles across multiple products with their association to categories, brand, and socio-political-economic dimensions are captured and kept in our repository. Any new profile that is being derived for an existing product or new product requires statistically observing the goodness of match using Chi-squared test for goodness of fit assuming that the points in the profiles are mean values of product demand market behavior.

*Step 1*: Chi-squared comparison of means between two selected profiles:
where

$$\sigma_i^d = \sqrt{(\sigma_i^{ea})^2 + \left(\sigma_i^{eb}\right)^2}$$

where, $O_i^a, O_i^b$ are the observed values for profiles *a* and *b*. $\sigma_i^{ea}, \sigma_i^{eb}$ are the standard error of difference for profiles *a* and *b*, at record pair *i*. $\sigma_i^{ea} = SD_i^a / \sqrt{N_i^a}$ and $\sigma_i^{eb} = SD_i^b / \sqrt{N_i^b}$, $SD_i^a$ and $SD_i^b$ are standard deviations of the observations with $N_i^a$ and $N_i^b$ points that were used to create record pair i.

*Step 2:* Compute the overall statistical significance across all point in the curve

$$\chi_{total}^2 = \sum_{i=1}^{M} \chi_i^2$$

and then the overall p-value for the comparison of two curves is determined using a $\chi^2$ calculator using *dF=M*, where *M* is the number of pairs of points.

*Step 3*: Determine dF for $\chi_i^2 = M$, the number of pairs of points

*Step 4*: Calculate overall p-value for the comparison of the two curves using the sum of $\chi^2$

*Step 5:* While p-value < α, the probability of significance, then the two profiles are similar.

Experimentation: The table below provides the mean and standard deviation of sales of two similar product profiles taken from 3 different geographies for each of products for 8 time periods. Now referring to Table III, example data representing mean sales and standard deviation for two products in 3 geographies across 8 periods. Table IV illustrates sample calculations of chi-squared test applied to two profiles presented in Table IV.

Table III

| Period | Product 1 Mean Sales ($O^a$) | Product 1 Std Dev ($\sigma^a$) | Product 2 Mean Sales ($O^b$) | Product 1 Std Dev ($\sigma^b$) |
|---|---|---|---|---|
| 1 | 2966.67 | 251.66 | 2809.00 | 267.561 |
| 2 | 3500.00 | 400.00 | 3349.33 | 426.662 |
| 3 | 4486.67 | 130.51 | 4307.67 | 138.854 |
| 4 | 5750.00 | 250.00 | 5613.67 | 293.013 |
| 5 | 6303.33 | 95.04 | 6144.00 | 60.008 |
| 6 | 5900.00 | 100.00 | 5749.00 | 98.879 |
| 7 | 6050.00 | 86.60 | 5866.00 | 70.235 |
| 8 | 5900.00 | 100.00 | 5743.33 | 128.594 |

Table IV

| Period | ABS($O^a$-$O^b$) | $\sigma^d$ | t-value | N/pt | dF | p-value | Chi Sq |
|---|---|---|---|---|---|---|---|
| 1 | 157.67 | 212.07 | 0.74 | 3 | 4 | 0.50 | 0.458 |
| 2 | 150.67 | 337.66 | 0.45 | 3 | 4 | 0.68 | 0.172 |
| 3 | 179.00 | 110.02 | 1.63 | 3 | 4 | 0.18 | 1.805 |
| 4 | 136.33 | 222.38 | 0.61 | 3 | 4 | 0.57 | 0.318 |
| 5 | 159.33 | 64.90 | 2.46 | 3 | 4 | 0.07 | 3.282 |
| 6 | 151.00 | 81.19 | 1.86 | 3 | 4 | 0.14 | 2.218 |
| 7 | 184.00 | 64.38 | 2.86 | 3 | 4 | 0.05 | 3.981 |
| 8 | 156.67 | 94.05 | 1.67 | 3 | 4 | 0.17 | 1.873 |

(continued)

| Period | ABS($O^a$-$O^b$) | $\sigma^d$ | t-value | N/pt | dF | p-value | Chi Sq |
|---|---|---|---|---|---|---|---|
| | | | | | | Sum Chi Sq | 14.109 |
| | | | | | | dF | 8 |
| | | | | | | p-value | 0.079 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of identifying life cycle stage of a product. The present disclosure provides a data repository, built based on business reach and market coverage. Further, the present disclosure addresses the gap using algorithms and models using high performance computing systems leveraging larger volumes of data and intelligence that has been collected over many years along with market data to design and develop the life cycle stage prediction model and a system.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (200), the method comprising:

receiving (202), by one or more hardware processors, a plurality of supply chain attributes pertaining to a product in real time from a plurality of sources, wherein the plurality of supply chain attributes are in a plurality of granularity levels;

classifying (204), by the one or more hardware processors, the plurality of supply chain attributes into one of a) a structured attributes b) a semi-structured attributes and c) unstructured attributes based on product attributes and definition using an ensemble of classifiers;

obtaining (206), by the one or more hardware processors, a plurality of preprocessed supply chain attributes by performing on the plurality of supply chain attributes a) data interpolation b) outliers elimination and c) trend analysis based on the classified supply chain data and an associated historical data;

obtaining (208), by the one or more hardware processors, a plurality of attribute groups from among the plurality of preprocessed supply chain attributes based on supply chain echelons and an associated scope, wherein a plurality of common attributes exists between adjacent echelons.

iteratively generating (210), by the one or more hardware processors, a gain ratio based decision tree associated with each of the plurality of attribute groups, the gain based decision tree comprising a plurality nodes representing the plurality of preprocessed supply chain attributes, wherein a plurality of leaf nodes and a hierarchy level associated with each of the plurality of nodes is decided based on a plurality of parameters comprising market intelligence, the product attributes, internal equivalent products, competitor products, policy and taxation parameters;

obtaining (212), by the one or more hardware processors, a classification detail associated with the product based on the generated gain ratio-based decision tree;

performing (214), by the one or more hardware processors, a future demand forecast of the product based on a historical transaction data, a plurality of internal equivalent products and a plurality of competitor products using a demand forecasting technique; and

identifying (216), by the one or more hardware processors, a product life cycle phase of the product based on the classification details associated with the product, a historical demand data pertaining to same and similar products and the future demand forecast using adaptive Q learning, wherein a life cycle associated with the product is mapped against a plurality of predefined supply chain based prepositions to identify the life cycle phase associated with the product.

2. The processor-implemented method (200) as claimed in claim 1, wherein the plurality of sources comprises a plurality of smart sensors, plurality of embedded devices, tags, Point of Sale (POS) devices and support data associated with the supply chain of the product.

3. The processor-implemented method (200) as claimed in claim 1, wherein the plurality of supply chain attributes comprises a market demand data, a product design data, a supplier data, a manufacturing data, a logistics data, a warranty data, a product support data, an end of lifecycle data and a reuse data.

4. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a plurality of supply chain attributes pertaining to a product in real time from a plurality of sources, wherein the plurality of supply chain attributes are in a plurality of granularity levels;

classify the plurality of supply chain attributes into one of a) a structured attributes b) a semi-structured attributes and c) unstructured attributes based on product attributes and definition using an ensemble of classifiers;

obtain a plurality of preprocessed supply chain attributes by performing on the plurality of supply chain attributes a) data interpolation b) outliers elimination and c) trend analysis based on the classified supply chain data and an associated historical data;

obtain a plurality of attribute groups from among the plurality of preprocessed supply chain attributes based on supply chain echelons and an associated scope, wherein a plurality of common attributes exists between adjacent echelons.

iteratively generate a gain ratio based decision tree associated with each of the plurality of attribute groups, the gain based decision tree comprising a plurality nodes representing the plurality of preprocessed supply chain attributes, wherein a plurality of leaf nodes and a hierarchy level associated with each of the plurality of nodes is decided based on a plurality of parameters comprising market intelligence, the product attributes, internal equivalent products, competitor products, policy and taxation parameters;

obtain a classification detail associated with the product based on the generated gain ratio-based decision tree;

perform a future demand forecast of the product based on a historical transaction data, a plurality of internal equivalent products and a plurality of competitor products using a demand forecasting technique; and

identify a product life cycle phase of the product based on the classification details associated with the product, a historical demand data pertaining to same and similar products and the future demand forecast using adaptive Q learning, wherein a life cycle associated with the product is mapped against a plurality of predefined supply chain based prepositions to identify the life cycle phase associated with the product.

5. The system (100) as claimed in claim 4, wherein the plurality of sources comprises a plurality of smart sensors, plurality of embedded devices, tags, Point of Sale (POS) devices and support data associated with the supply chain of the product.

6. The system (100) as claimed in claim 4, wherein the plurality of supply chain attributes comprises a market demand data, a product design data, a supplier data, a manufacturing data, a logistics data, a warranty data, a product support data, an end of lifecycle data and a reuse data.

7. One or more non-transitory machine-readable information storage mediums comprising one or more instructions which when executed by one or more hardware processors cause:

receiving, a plurality of supply chain attributes pertaining to a product in real time from a plurality of sources, wherein the plurality of supply chain attributes are in a plurality of granularity levels;

classifying, the plurality of supply chain attributes into one of a) a structured attributes b) a semi-structured attributes and c) unstructured attributes based on product attributes and definition using an ensemble of classifiers;

obtaining, a plurality of preprocessed supply chain attributes by performing on the plurality of supply chain attributes a) data interpolation b) outliers elimination and c) trend analysis based on the classified supply chain data and an associated historical data;

obtaining, a plurality of attribute groups from among the plurality of preprocessed supply chain attributes based on supply chain echelons and an associated scope, wherein a plurality of common attributes exists between adjacent echelons.

iteratively generating, a gain ratio based decision tree associated with each of the plurality of attribute groups, the gain based decision tree comprising a plurality nodes representing the plurality of preprocessed supply chain attributes, wherein a plurality of leaf nodes and a hierarchy level associated with each of the plurality of nodes is decided based on a plurality of parameters comprising market intelligence, the product attributes, internal equivalent products, competitor products, policy and taxation parameters;

obtaining, a classification detail associated with the product based on the generated gain ratio-based decision tree;

performing, a future demand forecast of the product based on a historical transaction data, a plurality of internal equivalent products and a plurality of competitor products using a demand forecasting technique; and

identifying, a product life cycle phase of the product based on the classification details associated with the product, a historical demand data pertaining to same and similar products and the future demand forecast using adaptive Q learning, wherein a life cycle associated with the product is mapped against a plurality of predefined supply chain based prepositions to identify the life cycle phase associated with the product.

8. The one or more non-transitory machine readable information storage mediums as claimed in claim 7, wherein the plurality of sources comprises a plurality of smart sensors, plurality of embedded devices, tags, Point of Sale (POS) devices and support data associated with the supply chain of the product.

9. The one or more non-transitory machine readable information storage mediums as claimed in claim 7, wherein the plurality of supply chain attributes comprises a market demand data, a product design data, a supplier data, a manufacturing data, a logistics data, a warranty data, a product support data, an end of lifecycle data and a reuse data.

100

108

MEMORY 104

MODULES 106

REPOSITORY 110

I/O INTERFACE
112

HARDWARE
PROCESSORS
102

FIG. 1A

FIG. 1B

200

receive a plurality of supply chain attributes pertaining to a product in real time from a plurality of sources, wherein the plurality of supply chain attributes are in a plurality of granularity levels    202

classify the plurality of supply chain attributes into one of a) a structured attributes b) a semi-structured attributes and c) an unstructured attributes based on product attributes and definition using an ensemble of classifiers    204

obtain a plurality of preprocessed supply chain attributes by performing on the plurality of supply chain attributes a) data interpolation b) outliers elimination and c) trend analysis based on the classified supply chain data and an associated historical data    206

obtain a plurality of attribute groups from among the plurality of preprocessed supply chain attributes based on supply chain echelons and an associated scope, wherein a plurality of common attributes exists between adjacent echelons    208

iteratively generate a gain ratio based decision tree associated with each of the plurality of attribute groups, the gain based decision tree comprising a plurality nodes representing the plurality of preprocessed supply chain attributes, wherein a plurality of leaf nodes and a hierarchy level associated with each of the plurality of nodes is decided based on a plurality of parameters comprising market intelligence, the product attributes, internal equivalent products, competitor products, policy and taxation parameters    210

A

**FIG. 2A**

200

(A)

obtain a classification detail associated with the product based on the generated gain ratio-based decision tree
212

perform a future demand forecast of the product based on a historical transaction data, a plurality of internal equivalent products and a plurality of competitor products using a demand forecasting technique
214

identify product life cycle phase of the product based on the classification details associated with the product, a historical demand data pertaining to same and similar products and the future demand forecast using adaptive Q learning, wherein a life cycle associated with the product is mapped against a plurality of predefined supply chain based prepositions to identify the life cycle phase associated with the product
216

**FIG. 2B**

Historical/Transactional Data

Data Characterization
1. Data Patterns – Products/Cycles/Trends/Seasonality
2. Estimates of data behavior – Mean, Median & Mode
3. Frequency Charts
4. Between Attribute Trends and Relationships

Data exploration and implications

| Time Series Models | TBATS Model | ETS Model | BSTS Model | Classification Model | ML Model |

Data Visualization to understand the implications

| Bagging | Boosting | Stacking |

Optimized results

FIG. 3

**FIG. 4A**

**FIG. 4B**

**EUROPEAN SEARCH REPORT**

Application Number

EP 25 20 2991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG YINGFENG ET AL: "A framework for Big Data driven product lifecycle management", JOURNAL OF CLEANER PRODUCTION, ELSEVIER, AMSTERDAM, NL, vol. 159, 11 May 2017 (2017-05-11), pages 229-240, XP085051176, ISSN: 0959-6526, DOI: 10.1016/J.JCLEPRO.2017.04.172 * abstract * * chapter 3 * ----- | 1-9 | INV. G06Q30/0202 |

TECHNICAL FIELDS
SEARCHED (IPC)

G06Q

The present search report has been drawn up for all claims

| Place of search | Date of completion of the search | Examiner |
|---|---|---|
| Munich | 23 January 2026 | Chauvet, Christophe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                               
& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421096074